# EUROPÄISCHE PATENTSCHRIFT

(11) **EP 0 632 961 B1**
(45) Veröffentlichungstag und Bekanntmachung des Hinweises auf die Patenterteilung: **04.08.1999**
(21) Anmeldenummer: 94108660.5
(22) Anmeldetag: 07.06.1994
(51) Int. Cl.: A23G 1/14

(54) **Conche**
Conche
Conche

(30) Priorität: 06.07.1993 CH 202393
(43) Veröffentlichungstag der Anmeldung: 11.01.1995
(73) Patentinhaber: BÜHLER AG, 9240 Uzwil (CH)
(72) Erfinder: Braeker, Willy, CH-9500 Wil (CH); Kuster, Werner, CH-9244 Niederuzwil (DE)

(56) Entgegenhaltungen:
- EP-A- 0 518 025
- EP-A- 0 565 887
- CH-A- 405 910

## Beschreibung

Die Erfindung betrifft eine Conche nach dem Oberbegriffe des Anspruches 1.

Seit langer Zeit wird immer wieder der Vorschlag gebracht, eine Conchierung mit Hilfe von Schnecken in einem Schneckengehäuse durchzuführen. Ein Beispiel dafür ist die DE-C-288 770. Nach diesem Vorschlag sind vier - im Querschnitt gesehen - entlang den Seiten eines Rechteckes angeordnete Schnecken jeweils in einem Schneckengehäuse untergebracht, die die Schokolademasse in einem Umlaufbetriebe bearbeiten. Dabei wird betont, dass es wesentlich sei, die Masse zu pressen und die einzelnen Masseteilchen fest gegeneinander zu pressen und zu zerreiben.

In der Tat kann mit Hilfe solcher Schnecken ein guter Versalbungseffekt und ein hoher Energieeintrag erreicht werden. Dies ist wohl auch der Grund, warum Schneckenapparate immer wieder für die Bearbeitung von Schokolademassen vorgeschlagen werden, obwohl sie am Markte kaum Bedeutung erlangt haben. Der Grund für die mangelnde Bedeutung liegt wohl nicht zuletzt darin, dass sich die Conchierarbeit ja nicht in der blossen Versalbung der Schokolademasse erschöpft, sondern bei herkömmlichen Conchen, wie sie beispielsweise mit drei Rotoren gemäss der DE-B-1 189 368 vorgeschlagen werden, zusätzlich zu dieser rein mechanischen Wirkung auch noch ein chemisch-physikalischer Stoffaustausch erzielt wird, da die radial abstehenden Flügel dieser Rotoren stets neue Oberflächen der Schokolademasse bei Einwirkung von Luft aussetzen, was einerseits dem intensiven Zutritt von Sauerstoff ermöglicht, anderseits das Entweichen von in der Masse allenfalls noch enthaltenen Brüden.

Der Erfindung liegt die Aufgabe zugrunde, an einer Conche der eingangs erwähnten, herkömmlichen Art, wie sie in der zuletzt genannten Schrift gezeigt ist, die Durchknetung und Versalbung der Masse unter Vermeidung von Agglomeraten bzw. Knollen, wie sie beispielsweise durch verschiedene Ingredienzen entstehen können, zu verbessern und damit die, oft beträchtliche, Conchierzeit zu verkürzen.

Es ist ferner bei Mischern bekannt, zwei mit Flügeln besetzten Rotoren einen Wende- oder Mischrotor zuzuordnen, der als Schneckenrotor ausgebildet sein kann. Obwohl bei Conchen auch die Mischwirkung eine Rolle spielt, ist es - siehe oben - damit alleine nicht getan, weil ja der Energieeintrag - anders als bei Mischern für körniges Gut, das ja möglichst wenig Erhitzung durch Energiezufurh ausgesetzt sein soll - bei der Schokoladeconchierung eine grosse Rolle spielt.

Der Erfindung liegt deshalb die Aufgabe zugrunde, eine Ausgestaltung von Bearbeitungswerkzeugen innerhalb eines Troges anzugeben, die möglichst mehrere Funktionen einer Conche zu verbessern vermag.

Erfindungsgemäss gelingt dies durch die kennzeichnenden Merkmale des Anspruches 1. Durch diese Massnahmen wird die Bearbeitung der Schokoladenmasse im Hinblick auf deren Qualität optimiert, wie praktische Versuche gezeigt haben, und darüberhinaus die Conchierzeit beträchtlich verkürzt, was die Herstellungskosten des Schokoladeproduktes in vorteilhafter Weise verringert. Denn die beiden Scherrotoren werden einerseits für einen erhöhten Energieeintrag und anderseits auch für eine gute Durchmischung sorgen, die ihrerseits auch den wiederholten Kontakt von Schokoladeoberflächen mit dem Luftsauerstoff sichert.

Es ist bevorzugt, wenn der Scherrrotor als Schneckenrotor ausgebildet und - gegenüber herkömmlichen Extruderschnecken - mit einer erhöhten Drehzahl von mindestens 1000 Umdrehungen, bevorzugt 1500 bis 3000 Umdrehungen, angetrieben wird und so ein relativ hohes Ausmass an Energie einbringt.

Nach einer bevorzugten Ausführungsform der Erfindung wird vorgeschlagen, dass der mindestens eine Messerrotor in einem der Bauhöhe nach tiefer im Conchiertrog angeordneten Trogabteil als das Trogabteil für den mindestens einen mit Flügeln und gegebenenfalls auch mit Schab- und Versalbungswerkzeugen ausgerüsteten Rotor vorgesehen ist. Zusammen mit den weiters vorgeschlagenen bevorzugten erfindungsgemässen konstruktiven Massnahmen, dass das der Bauhöhe nach im Conchiertrog tiefer angeordnete Trogabteil für den Schneckenrotor nach oben, in Richtung zu einem oder mehreren höher angeordneten Trogabteilen der mit Flügeln ausgerüstete Rotor offen ausgebildet ist, ergibt sich ein äusserst intensiver Materialaustausch zwischen den einzelnen Trogabteilen, was vorteilhaft zur Qualitätssteigerung beiträgt.

Es wird zum obenstehenden erfinderischen Merkmal noch hervorgehoben, dass es durchaus im Rahmen der Erfindung möglich ist, Schneckenapparate anzuwenden, wie sie die DE-C-28 87 70 vorschlägt. Diese Schneckenapparate besitzen ein über ihren Umfang geschlossenes Gehäuse mit einer Einlassöffnung. Diese bauliche Ausbildung erbringt jedoch nicht den intensivierten Materialaustausch, wie ein oben offenes Trogabteil.

Die weiters mit der Erfindung bevorzugt vorgeschlagenen alternativen und auch miteinander kombinierbaren Ausführungsformen, dass das innerhalb des Troges mindestens eine zu einer Drehung angetriebene Schneidwerkzeug an der Schneckenwendel eines Schneckenrotors als scharfe Schneidenkante ausgebildet ist; dass weiters die Schneidkante gegebenenfalls radial verlaufend, bevorzugt aber über den Umfang verlaufend angeordnet ist bzw. dass zwischen den Gängen der Schneckenwendel von dieser abstehende Schneidwerkzeuge vorgesehen sind bzw. die Schneckenwendel an mindestens einer Stelle zur Bildung radial verlaufender Schneidenkanten unterbrochen ausgebildet ist, sind wegen der dadurch erzielbaren Auflösung von Agglomeraten, die sich beispielsweise aus zugefügtem Zucker bzw. Süssstoff ergeben, zur Homogenisierung der Schokolademasse von besonderem Vorteil. Wenn eine solche Schneidkante am Schneckenrotor selbst vorgesehen ist, insbesondere von einer Schneckenwendel gebildet wird, die sich parallel zu den übrigen Rotoren erstreckt, statt quer dazu, so ermöglicht dies über die Länge des jeweiligen Trogabteiles eine ununterbrochene Schaberausbildung, wie sie an den Flügeln des jeweils anderen Rotors bevorzugt vorgesehen ist.

Dass darüberhinaus die Schneckenwendel unterschiedliche Steigung aufweisen kann, wobei, vorzugsweise, in Richtung zu Inneren des Conchiertroges hin, der Abstand der Schneckenwendelgänge zunehmend enger ausgebildet ist, erbringen ebenfalls qualitätssteigernde zusätzliche Effekte bei der Vermischung, Verknetung und Versalbung der Schokolademasse. In ökonomisch vorteilhafter Weise werden Arbeitszeiten für die Vermischung, Verknetung und Versalbung deutlich verkürzt.

Nach einer weiteren bevorzugten Ausführungsform der Erfindung wird vorgeschlagen, dass mindestens ein Schnecken- bzw. Messerrotor bzw. das zugehörige Trogabteil sich lediglich über einen Teilbereich der Baulänge des Conchiertroges erstreckt. Hierdurch wird die Pressung des Materials innerhalb des vom Schneckenrotor eingenommenen Trogabteils vorteilhaft erhöht.

Gemäss einer weiteren bevorzugen Ausführungsform der Erfindung ist vorgesehen, dass das Trogabteil des Messer- bzw. Schneckenrotors im Inneren des Conchiertroges und dessen Stirnwandung gegenüberliegend durch eine zur Rotorachse senkrechte Querwand oder geneigte Querwand abgeschlossen ist, die vorzugsweise auch zur Lagerung des Schneckenrotors vorgesehen ist. Durch Anordnung dieser Querwand wird die Presswirkung stark unterstützt. Insbesondere die geneigte Querwand lenkt das Material in vorteilhafter Weise an die Werkzeuge des mit Flügeln ausgerüsteten Rotors.

Besonders wirkungsvoll arbeitet die Conche in bevorzugter erfindungsgemässer Ausführungsform bei der die Länge des Messer- bzw. Schneckenrotors mindestens ein Viertel, höchstens die Hälfte, vorzugsweise ein Drittel der Baulänge des Conchiertroges beträgt.

Bei Anordnung mehrerer Messer- bzw. Schneckenrotoren sind diese nach einer weiteren bevorzugten Ausführungsform der Erfindung in axialer Richtung gegenüberliegend und/oder vorzugsweise parallel nebeneinander vorgesehen. Mehrere Schneckenrotore erbringen dann vor allem Vorteile, wenn diese von kürzerer Baulänge als die Baulänge des Conchiertroges sind. Es ist durchaus denkbar, diese Schneckenrotoren in der Art von Doppelschneckenextrudern auszubilden. Hierbei können vollkommen voneinander separierte aber auch ineinanderübergehende Trogabteile ausgebildet werden.

Die vorteilhaften Effekte bei der Mischung, Versalbung etc. der Schokolademasse werden in weiterer Ausgestaltung der Erfindung in einfacher Weise dadurch erreicht, dass bei Anordnung von mehreren Messer- bzw. Schneckenrotoren die Trogabteile aller Schneckenrotoren nach oben hin in die Trogabteile der mit Flügel ausgerüsteten Rotore münden.

Die vorteilhafte Funktion der erfindungsgemässen Conche ist vor allem dann gegeben, wenn die Achsen vorzugsweise aller Rotoren zueinander zumindest annähernd parallel angeordnet sind.

Nach einer weiteren bevorzugten Ausführungsform der Erfindung wird vorgeschlagen, dass für alle Rotoren eine, vorzugsweise, gemeinsame motorische Antriebsrichtung vorgesehen ist, und dass jene Drehrichtung jedes mit Flügeln und vorzugsweise mit Schab- und Versalbungswerkzeugen ausgerüsteten Rotors vorgesehen ist, die Schokoladenmasse von oben zum Trogabteil bzw. jedes Messer- bzw. Schneckenrotors fördert. Hierdurch kann eine wirkungsvolle und einfachst aufgebaute Drehzahlsteuerung aller Rotore erzielt werden und die Flussrichtung des Materials für die Arbeitsprozesse wirkungsvoll eingestellt bzw. gesteuert werden. In diesem Zusammenhang sei darauf hingewiesen, dass der Messer- bzw. Schneckenrotor im Sinne der Erfindung durchaus mit hoher Drehzahl betrieben wird, was für Schnecken in Förder- bzw. Presseinrichtung eher unüblich ist.

Weitere Einzelheiten der Erfindung ergeben sich anhand der nachfolgenden Beschreibung von in der Zeichnung schematisch dargestellten Ausführungsbeispielen. Es zeigen:
- Fig. 1: eine axonometrische Darstellung eines Teiles einer erfindungsgemässen Conche (nur einer der mindestens zwei Schnecken- bzw. Scherrotoren ist dargestellt), zu der
- Fig. 2: einen Querschnitt veranschaulicht;
- Fig. 3: zeigt einen Langsschnitt durch eine Ausführungsvariante einer erfindungsgemässen Conche, und
- Fig. 4: einen Querschnitt durch eine weitere erfindungsgemässe Ausführungsform.

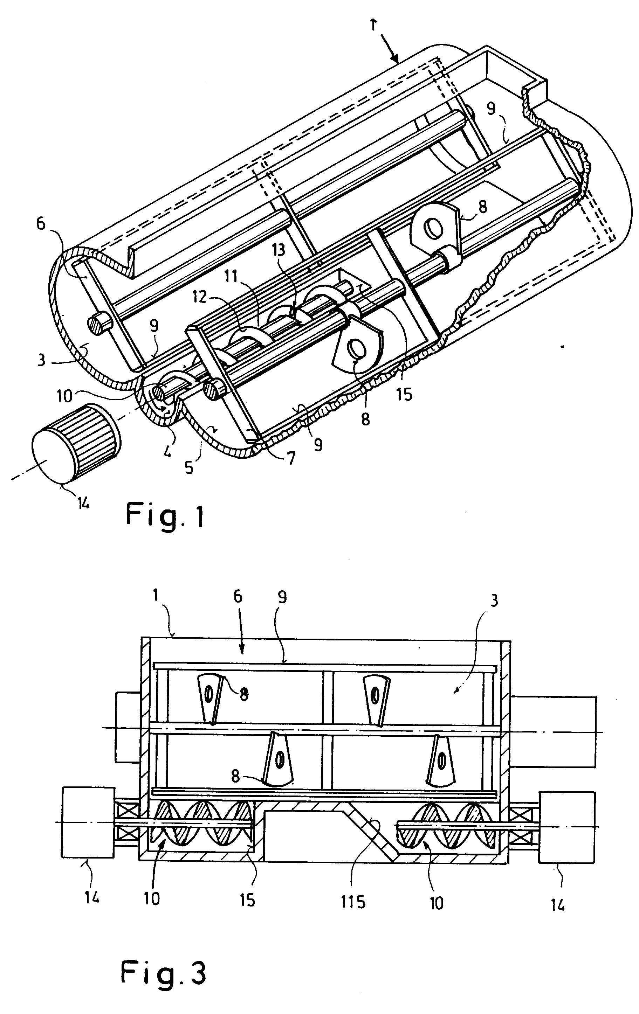

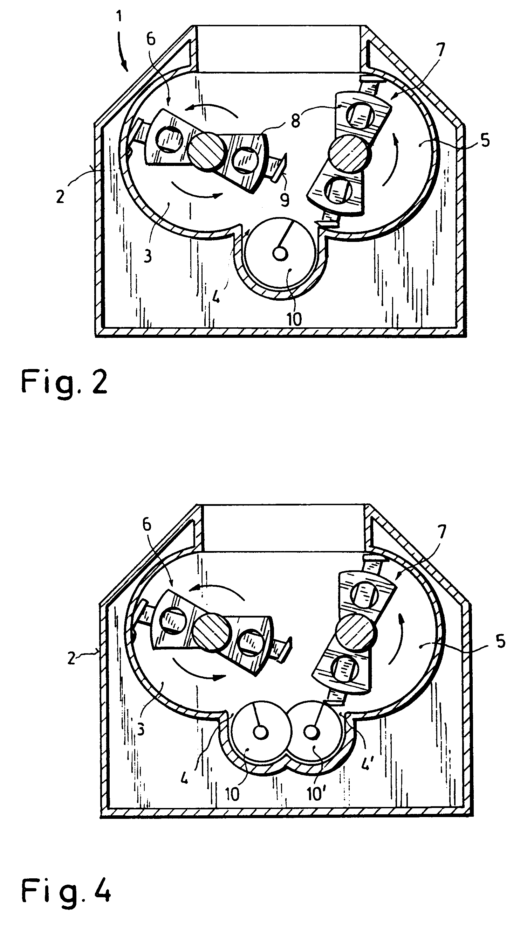

Gemäss den Fig. 1 und 2 ist ein Trog 1 vorgesehen, dessen Innenwandung 2 zur Bildung von drei, im Querschnitt gesehen, deutlich voneinander getrennten Trogabteilen 3, 4 und 5 ausbildet ist. Wie aus Fig. 3 hervorgeht, ist ein viertes Trogabteil axial gegenüber dem Abteil 4 vorgesehen. Jedes Trogabteil umschliesst eng je einen der Rotoren, wovon zwei Rotoren 6, 7 in Fig. 1 lediglich teilweise und schematisch dargestellt sind. Beispielsweise ist die Fig. 1 im Sinne der Fig. 3 mit zwei axial gegenüberliegenden Rotoren 10 ergänzt zu denken. Die Rotoren 6 und 7 sind in herkömmlicher Weise mit radial abstehenden Flügeln ausgestattet, wovon Flügel 8, vorzugsweise mit darin vorgesehenen Öffnungen der Mischung dienen, wogegen Flügel 9 mit Schabe- und Versalbungswerkzeugen an ihrem Ende ausgebildet sind, welche Werkzeuge mit der jeweiligen Trogwandung 2 zusammenwirken. Diese Schabe- bzw. Versalbungswerkzeuge können, da sich alle Rotoren parallel zueinander erstrecken, im wesentlichen über die gesamte Lange des Troges ununterbrochen bzw. durchlaufend ausgebildet sein. Betrachtet man die Fig. 2 und 4, so zeigt sich, dass die Werkzeuge 9 bei der Drehrichtung des linken Rotors als Spachtelwerkzeuge wirken, bei der Drehrichtung des rechten Rotors als Versalbungs- bzw. Spachtelwerkzeuge. Diese Darstellung dient nur der Veranschaulichung der Funktionen, denn im Normalfall wird die Ausrichtung an beiden Rotoren gleich sein, so dass die Werkzeuge 9 beider Rotoren (falls eine Drehrichtungsänderung vorgesehen ist) in der einen Drehrichtung als Spachtelwerkzeuge, in der anderen Richtung als Versalbungswerkzeug wirken.

Es sei jedoch erwähnt, dass es im Rahmen der Erfindung möglich wäre, auf solche Versalbungswerkzeuge zu verzichten, weil ja mindestens ein im Trogabteil 4 vorgesehener Messer- bzw. Schneckenrotor 10 zusammen mit der Wandung des Trogabteiles 4 eine intensive Knetung und Versalbung vornimmt. Dabei wird ein zusätzlicher günstiger Effekt dann geschaffen, wenn die Schneckenwendel des Rotors 10 an ihrer Aussenseite mit scharfen Schneidkanten 11 versehen ist. Alternativ oder kumulativ zu diesem Merkmal kann der Schneckenrotor 10 auch mit radial verlaufenden Schneidkanten versehen werden, beispielsweise indem ein Abschnitt seiner Länge mit solchen Schneidwerkzeugen besetzt wird oder indem zwischen den Wendeln des Rotors 10 Schneidwerkzeuge abstehen. Eine besondere Ausführungsform kann darin bestehen, dass die Wendel 12 an einer oder mehreren Stellen 13 zur Bildung radial verlaufender Schneidkanten unterbrochen ist. Derartige Unterbrechungen fördern auch noch die Mischwirkung. Der Antrieb der Rotoren 6, 7 und 10 erfolgt in an sich herkömmlicher Weise von aussen her, wobei lediglich ein Motor 14 in Fig. 1 dargestellt ist, der über ein entsprechendes Getriebe auch die anderen Rotoren 6 und 7 treiben könnte, doch ist zweckmässig für jeden Rotor 6, 7 und 10 ein gesonderter motorischer Antrieb vorgesehen.

Für den Betrieb der Conche ist es vorteilhaft, wenn das den Schneckenrotor 10 aufnehmende Trogabteil 4 in der aus Fig. 1 deutlich ersichtlichen Weise an der Oberseite offen ist. Dadurch ergibt sich ein intensiverer Austausch von Schokolademasse zwischen den einzelnen Trogabteilen 3 bis 5 und eine bessere Durchmischung.

Dieser Austausch der Schokolademassen erfolgt besonders intensiv bei einer Anordnung mit mindestens drei Rotoren, wie sie aus den Fig. 1 und 2 ersichtlich ist, wobei diese drei Rotoren durch wenigstens einen weiteren Scherrotor ergänzt sind, wie später an Hand der Fig. 3 und 4 gezeigt wird.

Dabei wird der Rotor 7 im Uhrzeigergegensinne betrieben, so dass die radial abstehenden Flügel bei ihrer Drehung die Schokolademasse radial und tangential abwärts in das Trogabteil 4 des Schneckenrotors 10 fördern. Dort wird die Schokoladenmasse einer starken Pressung unterzogen, die noch dadurch unterstützt wird, dass am Ende des Trogabteiles 4 eine quer aufragende Abschlusswand 15 vorgesehen ist (Fig. 1). Die Masse wird also gegen diese Fläche 15 gepresst, mag aber auch seitlich aus der oberen Oeffnung des Trogabteiles 4 austreten. Zur Unterstützung dieser Wirkung kann vorgesehen werden, dass die Schneckenwendel 12 eine unterschiedliche Steigung über ihre Länge besitzt, beispielsweise gegen ihr der Wandung 15 zugekehrtes Ende hin engere Wendeln besitzt. Dabei gestattet die Wandung 15 gewünschtenfalls den Schneckenrotor 10 darin zu lagern, so dass er einerseits an der äusseren Trogwand und anderseits an der Querwand 15 abgestützt sein kann.

Das durch die Pressung des Schneckenrotors 10 aus dem Trogabteil 4 herausgepresste Schokoladenmaterial wird zweckmässig durch die Flügel 8 mit den Schabewerkzeugen 9 abgestreift und gelangt so aus dem Trogabteil 4 in das Trogabteil 3, wo es einer weiteren Bearbeitung unterzogen wird. Dabei ist ersichtlich, dass durch die Axialbewegung des Schneckenrotors 10 eine noch intensivere Durchmischung erzielt wird, weil sich diese Axialbewegung noch der Bewegung der Masse zwischen den einzelnen Trogabteilen 3 bis 5 überlagert.

Während die Fig. 1 und 2 einen Schneckenrotor 10 zeigen, der sich nur über einen Teil der Länge des Troges 1 erstreckt, ist es im Rahmen der Erfindung durchaus möglich, einen Schneckenrotor vorzusehen, der die gesamte Länge des Troges einnimmt. Es wurde jedoch oben erläutert, warum das Zusammenwirken mit einer Querwand 15 von Vorteil ist, welche Querwand zweckmässig in einem Abstand von der Stirnwand des Troges angeordnet ist, der wenigstens ein Viertel, bevorzugt ein Drittel, gegebenenfalls der Hälfte der Länge des Troges 1 entspricht. Demgemäss verbleibt eine gewisse Troglänge, in der an sich kein Schneckenrotor zur Wirkung käme, weshalb es gemäss Fig. 3 vorteilhaft ist, mindestens eine zweite Schnecke 10 von der gegenüberliegenden Seite des Troges 1 her anzuordnen. Es ist ferner ersichtlich, dass die Wandung 15 zwar bevorzugt etwa senkrecht zur Achse des Schneckenrotors 10 liegt, gegebenenfalls aber im Sinne der in Fig. 3 ersichtlichen Wandung 115 in einem von 90° abweichenden Winkel zur Achse des Rotors 10 stehen kann.

Wenn also erfindungsgemäss mindestens zwei Schneckenrotoren 10 vorgesehen sind, so muss dies nicht im Sinne der Fig. 3 von einander gegenüberliegenden Seiten her erfolgen, sondern kann auch im Sinne der Fig. 4 in Form zweier nebeneinanderliegender und vorzugsweise zueinander paralleler Schneckenrotoren 10, 10' verwirklicht werden. Nach der Darstellung der Fig. 4 greifen diese Rotoren 10, 10' ineinander, um so eine intensivere Durchknetung der Schokolademasse zu erzielen, doch ist dies nicht unbedingt erforderlich, vielmehr könnten die Rotoren 10, 10' auch unter Bildung eines Spaltes zwischen einander angeordnet sein. Falls die Rotoren 10, 10' nicht parallel zueinander angeordnet werden, können sie unter einem geringen Winkel zueinander liegen, insbesondere wenn der Schneckendurchmesser gegen die Wandung 15 (vgl. die vorherigen Figuren) abnimmt. In jedem Falle ist aber die Drehrichtung des jeweiligen Schneckenrotors 10 derart ausgebildet, dass die Schokolademasse vorteilhaft gegen die Mitte des Troges hin gefördert wird.

Wie ersichtlich, bildet die Trogwandung im Bereiche der beiden Schneckenrotoren 10, 10' jeweils ein gesondertes Abteil 4, 4' aus, wobei die Trogwandung an der Unterseite etwa eine liegende 3 bildet. An sich ist es aber ebenso möglich, beide Schneckenrotoren 10, 10' in einem gemeinsamen Trogabteil unterzubringen, obwohl dies nicht bevorzugt ist. Ferner ist es auch bei einer Ausführungsform gemäss Fig. 4 denkbar, diese mit einer Ausführungsform gemäss Fig. 3 derart zu kombinieren, dass von den beiden Stirnwänden des Troges 1 her jeweils ein Paar von Schneckenrotoren 10, 10' in den Trograum ragt.

Es versteht sich, dass die Förderrichtung der einander gegenüberliegenden Rotoren (vgl. Fig. 3) in der Regel einander entgegengesetzt sein wird, obwohl es ebenfalls denkbar wäre, die einander gegenüberliegenden Rotoren mit gleicher Förderrichtung laufen zu lassen. In diesem Falle könnte beispielsweise die Wandung 115 die Einzugswandung für das Material darstellen und die in Fig. 3 rechte, senkrecht zur Achse des Rotors 10 gelegene Wand jenen Austrittsspalt begrenzen, über den das Material ausgepresst wird.

Obwohl der (die) Schneckenrotor(en) 10 mittig an der Unterseite des Troges 1 dargestellt sind, was bevorzugt ist, wäre es im Rahmen der Erfindung ebenfalls möglich, sie beispielsweise an einer Seite bzw. auf halber Höhe oder oben am Trog anzuordnen.

Es sei erwähnt, dass mit Hilfe der gezeigten Vorrichtung vor allem eine Auflösung von Grossagglomeraten erzielt wird, dass sich aber überraschenderweise folgende weitere Effekte gezeigt haben, wofür zur Zeit noch keine Begründung gegeben werden kann, die aber in der Tat vorhanden und beobachtbar sind:
- es findet eine Reagglomeration von Feinstpartikeln statt, was zu einem günstigeren Volumen/Oberflächenverhältnis (spezifische Oberfläche) führt und den Fettbedarf (d.h. den Bedarf an teurer Kakaobutter) verringert, und
- es ergibt sich eine auffällige Verminderung der Viskosität der Schokoladenmasse, was für die vorhergehende Walzarbeit eine Entlastung bedeutet.

## Patentansprüche

1. Conche mit mindestens drei, jeweils in einem Trogabteil eines Conchiertroges angeordneten Rotoren (6, 7, 10, 10'), von denen mindestens ein Rotor (6, 7) mit radial abstehenden Flügeln (8, 9) versehen ist, wobei Trogwände des Conchiertroges jeden Rotor über einen Teil seines Umfanges eng umschliessend angeordnet sind, dadurch gekennzeichnet, dass von den Rotoren mindestens einer ein sich etwa parallel zu den beiden anderen Rotoren erstreckender, als Messerrotor (10, 10') mit mindestens einer Schneidkante (11) bzw. als Schneckenrotor ausgebildeter Scherrotor ist, und dass auch ein solcher Rotor als vierter Rotor vorgesehen ist, wobei für diese Rotoren vorzugsweise jeweils ein eigener Antrieb (14) vorgesehen ist.

2. Conche nach Anspruch 1, dadurch gekennzeichnet, dass mindestens ein Scherrotor (10, 10') an der Unterseite, des Troges, vorzugsweise gegenüber dem jeweiligen anderen Trogabteil (3, 5) vertieft, angeordnet ist. vorzugsweise in einem der Bauhohe nach tiefer im Conchiertrog (1) angeordneten Trogabteil (4, 4') als das Trogabteil (3, 5) für den mindestens einen mit Flügeln (8) und gegebenenfalls auch mit Schab- und Versalbungswerkzeugen (9), ausgerüsteten Rotor (6, 7) vorgesehen ist.

3. Conche nach Anspruch 1 oder 2, dadurch gekennzeichnet, dass das, insbesondere der Bauhöhe nach im Conchiertrog (1) tiefer angeordnete, Trogabteil (4, 4') für den Messerrotor (10, 10') an einer Längsseite - insbesondere nach oben, in Richtung zu einem oder mehreren hoher angeordneten Trogabteilen (3, 5) der mit Flügeln (8) ausgerüsteten Rotor (6, 7) - offen ausgebildet ist.

4. Conche nach einem der vorhergehenden Ansprüche, dadurch gekennzeichnet, dass an einer Schneckenwendel (12) des Messerrotors (10, 10') eine scharfe Schneidenkante (11) ausgebildet ist, und dass vorzugsweise die Schneidenkante (11) der Schneckenwendel (12) über deren Umfang verlaufend angeordnet ist.

5. Conche nach einem der vorhergehenden Ansprüche, dadurch gekennzeichnet, dass zwischen den Gängen der Schneckenwendel (12) zu deren Achse etwa radial verlaufende, z.B. radial abstehende, Schneidwerkzeuge vorgesehen sind, und dass bevorzugt die Schneckenwendel (12) an mindestens einer Stelle (13) zur Bildung radial verlaufender Schneidenkanten unterbrochen ausgebildet ist.

6. Conche nach einem der vorhergehenden Ansprüche, dadurch gekennzeichnet, dass der Rotor (6, 7) mit radial abstehenden Flügeln (8) mit im wesentlichen über die Länge des Troges ununterbrochenen, bis an die Trogwand (2) reichenden Schabe- bzw. Versalbungswerkzeugen (9) versehen ist.

7. Conche nach einem der vorhergehenden Ansprüche, dadurch gekennzeichnet, dass die Schneckenwendel (12) unterschiedliche Steigung aufweist, und dass, vorzugsweise, in Richtung zum Inneren des Conchiertroges (1) hin, der Abstand der Schneckenwendelgänge zunehmend enger ausgebildet ist.

8. Conche nach einem der vorhergehenden Ansprüche, dadurch gekennzeichnet, dass mindestens ein Messerrotor (10, 10') bzw. das zugehörige Trogabteil (4, 4') sich lediglich über einen Teilbereich der Baulänge des Conchiertroges (1) erstreckt, und dass vorzugsweise das Trogabteil (4, 4') des Messerrotors (10, 10') im Inneren des Conchiertroges (1) und dessen Stirnwandung gegenüberliegend durch eine zur Rotorachse senkrechte Querwand (15) oder geneigte Querwand (115) abgeschlossen ist, die bevorzugt auch zur Lagerung des Schneckenrotors (10, 10') vorgesehen ist.

9. Conche nach einem der vorhergehenden Ansprüche, dadurch gekennzeichnet, dass die Länge des Messerrotors (10, 10') mindestens ein Viertel, höchstens die Hälfte, vorzugsweise ein Drittel, der Baulänge des Conchiertroges (1) und/oder die Drehzahl des Schnecken- bzw. Messerrotors mindestens 1000 Umdrehungen pro Minute, bevorzugt 1500 bis 3000 Umdrehungen pro Minute, beträgt.

10. Conche nach einem der vorhergehenden Ansprüche, dadurch gekennzeichnet, dass mehrere Schnecken und/oder Messerrotoren (10, 10') innerhalb des Troges angeordnet sind, und dass vorzugsweise wenigstens eines der folgenden Merkmale vorgesehen ist:
a) wenigstens zwei Rotoren sind in axialer Richtung gegenüberliegend angeordnet;
b) wenigstens zwei Rotoren sind parallel nebeneinander, insbesondere ineinandergreifend, vorgesehen;
c) die Trogabteile (4, 4') von wenigstens zwei Schneckenrotoren (10, 10') münden nach oben hin in die Trogabteile (3, 5) der mit Flügeln (8) ausgerüstete Rotore (6, 7);
d) die Achsen wenigstens zweier, vorzugsweise aller, Rotoren (6, 7, 10, 10') sind zueinander zumindest annähernd parallel angeordnet;
e) für wenigstens zwei, insbesondere für alle, Rotoren (6, 7, 10, 10') ist eine, vorzugsweise gemeinsame, motorische Antriebseinrichtung (14) vorgesehen, wobei jene Drehrichtung wenigstens eines mit Flügeln (8) und vorzugsweise mit Schab- und Versalbungswerkzeugen (9) ausgerüsteten Rotors (6, 7) vorgesehen ist, die die Schokoladenmasse von oben zum Trogabteil (4, 4') mindestens eines Schnecken- bzw. Messerrotors (10, 10') fordert;
f) für wenigstens zwei, insbesondere für alle, Rotoren (6, 7, 10, 10') ist eine, vorzugsweise gemeinsame, motorische Antriebseinrichtung (14) vorgesehen, wobei jene Drehrichtung wenigstens eines mit Flügeln (8) und vorzugsweise mit Schab- und Versalbungswerkzeugen (9) ausgerüsteten Rotors (6, 7) vorgesehen ist, die die Schokoladenmasse, welche aus dem Trogabteil (4, 4') mindestens eines Schnecken- bzw. Messerrotors (10, 10') austritt, wegfördert.

## Claims

1. Conch with at least three rotors (6, 7, 10, 10') which are arranged in each case in a trough compartment of a conch trough and of which at least one rotor (6, 7) is provided with radially projecting vanes (8, 9), trough walls of the conch trough being arranged so as to surround each rotor closely over a portion of its periphery, characterised in that at least one of the rotors is a shearing rotor which extends substantially parallel to the other two rotors and is designed as a knife rotor (10, 10') with at least one cutting edge (11) or as a worm rotor and in that a rotor of this type is also provided as fourth rotor, these rotors preferably each being provided with their own drive (14).

2. Conch according to claim 1, characterised in that at least one shearing rotor (10, 10') is arranged on the underside of the trough, preferably sunken relative to the other respective trough compartment (3, 4), preferably in a trough compartment (4, 4') arranged deeper in the conch trough (1) with respect to the overall height than the trough compartment (3, 5) for the at least one rotor (6, 7) equipped with vanes (8) and optionally also with scraping and rubbing tools (9).

3. Conch according to claim 1 or 2, characterised in that the trough compartment (4, 4') for the knife rotor (10, 10') arranged deeper in the conch trough (1), in particular with respect to overall height, is open in design on one longitudinal side - in particular upwardly in the direction of one or more higher trough compartments (3, 5) of the rotor (6, 7) equipped with vanes (8).

4. Conch according to one of the preceding claims, characterised in that a sharp cutting edge (11) is formed on a worn helix (12) of the knife rotor (10, 10') and in that the cutting edge (11) of the worm helix (12) is preferably arranged so as to extend over its periphery.

5. Conch according to one of the preceding claims, characterised in that cutting tools are provided between the threads of the worm helix (12) which extend substantially radially to the axis thereof, for example project radially, and in that the worm helix (12) is preferably interrupted at least at one point (13) to form radially extending cutting edges.

6. Conch according to one of the preceding claims, characterised in that the rotor (6, 7) with radially projecting vanes (8) is provided with scraping and rubbing tools (9) which are uninterrupted substantially over the length of the trough and extend to the trough wall (2).

7. Conch according to one of the preceding claims, characterised in that the worn helix (12) has a different pitch and in that the distance between the worn helix threads preferably decreases gradually in the direction of the interior of the conch trough (1).

8. Conch according to one of the preceding claims, characterized in that at least one knife rotor (10, 10') or the associated trough compartment (4, 4') extends merely over a proportion of the overall length of the conch trough (1) and in that the trough compartment (4, 4') of the knife rotor (10, 10') in the interior of the conch trough (1) and opposite its end wall is preferably closed by a transverse wall (15) or transverse wall (115) which is respectively perpendicular or inclined relative to the rotor axis and is preferably also provided for the mounting of the worm rotor (10, 10').

9. Conch according to one of the preceding claims, characterised in that the length of the knife rotor (10, 10') is at least a quarter, at most half, preferably a third of the overall length of the conch trough (1) and/or the speed of the worn or knife rotor is at least 1000 revolutions per minute, preferably 1500 to 3000 revolutions per minute.

10. Conch according to one of the preceding claims, characterised in that a plurality of worms and/or knife rotors (10, 10') is arranged within the trough and in that preferably at least one of the following features is provided:
a) at least two rotors are axially opposed;
b) at least two rotors are provided next to one another in parallel, in particular in an intermeshing manner;
c) the trough compartments (4, 4') of at least two worm rotors (10, 10') open upwardly into the trough compartments (3, 5) of the rotors (6, 7) equipped with vanes (8);
d) the axes of at least two, preferably all rotors (6, 7, 10, 10') are arranged at least substantially parallel to one another;
e) a preferably common motor drive system (14) is provided for at least two, in particular for all, rotors (6, 7, 10, 10'), the proposed direction of rotation of at least one rotor (6, 7) equipped with vanes (8) and preferably with scraping and rubbing tools (9) being that which conveys the chocolate mass from above to the trough compartment (4, 4') of at least one worm or knife rotor (10, 10');
f) a preferably common motor drive system (14) is provided for at least two, in particular for all, rotors (6, 7, 10, 10'), the proposed direction of rotation of at least one rotor (6, 7) equipped with vanes (8) and preferably with scraping and rubbing tools (9) being that which carries off the chocolate mass issuing from the trough compartment (4, 4') of at least one worm or knife rotor (10, 10').

## Revendications

1. Appareil d'affinage de chocolat, comprenant au moins trois rotors (6, 7, 10, 10') qui sont disposés chacun dans un compartiment respectif d'un bac d'affinage de chocolat et dont au moins un rotor (6, 7) est pourvu de pales (8, 9) se dressant radialement, des parois du bac d'affinage étant disposées de façon à entourer étroitement chaque rotor sur une partie de sa périphérie, caractérisé en ce que, parmi les rotors, au moins l'un est un rotor de cisaillement s'étendant sensiblement parallèlement aux deux autres rotors est réalisé sous forme d'un rotor à lame (10, 10'), comportant au moins une arête de coupe (11), ou sous forme d'un rotor à vis sans fin et en ce qu'il est également prévu un rotor de ce type servant de quatrième rotor, un entraînement propre (14) respectif étant de préférence prévu pour chacun de ces rotors.

2. Appareil d'affinage de chocolat suivant la revendication 1, caractérisé en ce qu'au moins un rotor de cisaillement (10, 10') est disposé du côté inférieur du bac, de préférence en un emplacement plus bas que chaque autre compartiment de bac (3, 5), de préférence dans un compartiment de bac (4, 4') situé dans le bac d'affinage (1) en un emplacement plus bas, en fonction de la hauteur structurelle, que le compartiment de bac (3, 5) prévu pour le ou les rotors (6, 7) pourvus de pales (8) et éventuellement aussi d'outils de raclage et d'onctuosité (9).

3. Appareil d'affinage de chocolat suivant l'une des revendications 1 et 2, caractérisé en ce que le compartiment de bac (4, 4') prévu pour le rotor à lame (10, 10'), notamment disposé plus bas dans le bac d'affinage de chocolat en fonction de la hauteur structurelle, est réalisé sur un côté longitudinal, en étant ouvert, notamment vers le haut en direction d'un ou plusieurs compartiments (3, 5), situés plus haut, du rotor (6, 7) pourvu de pales (8).

4. Appareil d'affinage de chocolat suivant l'une des revendications précédentes, caractérisé en ce qu'une arête de coupe (11) vive est réalisée sur une hélice de vis sans fin (12) du rotor à lame (10, 10') et en ce que de préférence l'arête de coupe (11) de l'hélice de vis sans fin (12) est disposée de façon à s'étendre suivant la périphérie de celle-ci.

5. Appareil d'affinage de chocolat suivant l'une des revendications précédentes, caractérisé en ce qu'entre les spires de l'hélice de vis sans fin (12), il est prévu des outils de coupe s'étendant sensiblement radialement par rapport à l'axe de celle-ci, par exemple se dressant radialement, et en ce que de préférence l'hélice de vis sans fin (12) est interrompue en au moins un emplacement (13) en vue de former des arêtes de coupe s'étendant radialement.

6. Appareil d'affinage de chocolat suivant l'une quelconque des revendications précédentes, caractérisé en ce que le rotor (6, 7) comportant des pales (8) se dressant radialement est pourvu d'outils de raclage et d'onctuosité (9) s'étendant jusqu'à la paroi de bac (2) et essentiellement ininterrompus sur la longueur du bac.

7. Appareil d'affinage de chocolat suivant l'une quelconque des revendications précédentes, caractérisé en ce que l'hélice de vis sans fin (12) présente une pente différente et en ce que l'espacement des spires de l'hélice de vis sans fin est réalisé de façon à être de plus en plus étroit, de préférence en direction de l'intérieur du bac d'affinage de chocolat (1).

8. Appareil d'affinage de chocolat suivant l'une quelconque des revendications précédentes, caractérisé en ce qu'au moins un rotor (10, 10') ou le compartiment de bac (4, 4') associé s'étend seulement sur une zone partielle de la longueur du bac d'affinage de chocolat (1)
et en ce que de préférence le compartiment de bac (4, 4') du rotor à lame (10, 10') est fermé, à l'intérieur du bac d'affinage de chocolat (1) et en regard d'une paroi frontale de celui-ci, au moyen d'une paroi transversale (15) perpendiculaire à l'axe de rotor ou d'une paroi transversale (115) inclinée qui est également de préférence prévue pour le montage à palier du rotor à vis sans fin (10, 10').

9. Appareil d'affinage de chocolat suivant l'une quelconque des revendications précédentes, caractérisé en ce que la longueur du rotor à lame (10, 10') vaut au moins un quart, au maximum la moitié, de préférence un tiers, de la longueur du bac d'affinage de chocolat (1)
et/ou
la vitesse de rotation du rotor à vis sans fin ou à lame vaut au moins 1000 tours par minute, de préférence 1500 à 3000 tours par minute.

10. Appareil d'affinage de chocolat suivant l'une quelconque des revendications précédentes, caractérisé en ce que plusieurs rotors à vis sans fin ou à lame (10, 10') sont disposés dans le bac et en ce que de préférence au moins l'une des particularités suivantes est prévue :
a) au moins deux rotors sont disposés de façon à être en regard l'un de l'autre suivant la direction axiale,
b) au moins deux rotors sont prévus, s'étendant parallèlement l'un à côté de l'autre, notamment en se pénétrant l'un l'autre,
c) les compartiments de bac (4, 4') d'au moins deux rotors à vis sans fin (10, 10') débouchent vers le haut dans les compartiments de bac (3, 5) des rotors (6, 7) pourvus de pales (8),
d) les axes d'au moins deux rotors (6, 7, 10, 10') ou de tous les rotors (6, 7, 10, 10') sont disposés, au moins approximativement, parallèlement les uns aux autres,
e) pour au moins deux rotors (6, 7, 10, 10'), notamment pour tous les rotors (6, 7, 10, 10'), il est prévu un dispositif d'entraînement (14) à moteur, de préférence commun, tandis qu'est prévu, pour au moins un rotor (6, 7) pourvu de pales (8) et de préférence d'outils de raclage et d'onctuosité, le sens de rotation qui, à partir d'en haut, fait avancer la masse de chocolat vers le compartiment de bac (4, 4') d'au moins un rotor à vis sans fin ou à lame (10, 10'),
f) pour au moins deux rotors (6, 7, 10, 10'), notamment pour tous les rotors (6, 7, 10, 10'), il est prévu un dispositif d'entraînement (14) à moteur, de préférence commun, tandis qu'est prévu, pour au moins un rotor (6, 7) pourvu de pales (8), et de préférence d'outils de raclage et d'onctuosité, le sens de rotation qui fait avancer la masse de chocolat qui sort du compartiment de bac (4, 4') d'au moins un rotor à vis sans fin ou à lame (10, 10').
